# EUROPEAN PATENT APPLICATION

(11) **EP 1 944 648 A2**
(43) Date of publication of application: **16.07.2008**
(21) Application number: 08000423.7
(22) Date of filing: 10.01.2008
(51) Int. Cl.: G02F 1/1362

(54) **Display panel, method of inspecting the display panel and method of manufacturing the display panel**

(30) Priority: 12.01.2007 KR 20070003566
(71) Applicant: Samsung Electronics Co., Ltd., Yeongtong-gu Suwon-city, Gyeonggi-do 442-742 (KR)
(72) Inventor: Kwon, Sun-Ja, Gunpo-si, Gyeonggi-do (KR); Jeon, Jin, Anyang-si, Gyeonggi-do (KR); Park, Young-Gi, Shiheung-si, Gyeonggi-do (KR)
(74) Representative: Dr. Weitzel & Partner

(57) **Abstract**

A display panel includes an array substrate, an opposite substrate facing the array substrate, and a liquid crystal layer interposed between the array and opposite substrates. The array substrate includes a gate wiring, a data wiring, a pixel section, a sensor wiring section, a sensor electrode section and a sensor pad section. The gate wiring is formed in a first direction. The data wiring is formed in a second direction crossing the first direction. The pixel section is electrically connected to the gate and data wirings. The sensor wiring section is spaced apart from the gate and data wirings. The sensor electrode section is electrically connected to the sensor wiring section. The sensor pad section applies a test voltage to the sensor wiring section in order to inspect a display panel defect. Therefore, a short defect, which is generated between the array substrate and the opposite substrate, may be easily inspected.

## Description

### BACKGROUND OF THE INVENTION

### 1. Field of the Invention

The present invention relates to a display panel, a method of inspecting the display panel and a method of manufacturing the display panel. More particularly, the present invention relates to a display panel capable of easily inspecting a short defect, a method of inspecting the display panel and a method of manufacturing the display panel.

### 2. Description of the Related Art

Generall, a liquid crystal display ("LCD") device, among various flat panel display devices, has various advantages, such as thinner thickness, lighter weight, lower driving voltage and lower power consumption, etc., as compared to other display devices, such as cathode ray tube ("CRT") devices, plasma display panel ("PDP") devices etc. As a result, LCD devices are widely employed for various electronic devices such as a monitor, a lap top computer, a cellular phone, etc. The LCD device includes an LCD panel that displays images using a light-transmitting ratio of liquid crystal molecules, and a backlight assembly disposed below the LCD panel to provide the LCD panel with light.

The LCD panel includes an array substrate, an opposite substrate and a liquid crystal layer. The array substrate includes a plurality of signal lines, a plurality of thin-film transistors ("TFTs") and a plurality of pixel electrodes. The opposite substrate faces the array substrate and has a common electrode. The liquid crystal layer is interposed between the array substrate and the opposite substrate.

The LCD panel may have a touch panel function that may receive a position data through an external pressure. That is, if a screen of the LCD panel is touched by an electric pen or a finger, then the LCD panel may transmit a position data signal to a central processing unit of a main system.

The LCD panel further includes an additional sensor wiring so as to perform the touch panel function. That is, the sensor wiring is formed in the array substrate to provide the central processing unit with a position data generated when the array substrate and the opposite substrate are contacted with each other.

If a screen of the LCD panel is not touched by an electric pen or a finger, then the array substrate and the opposite substrate should be non-shorted to each other. However, the array substrate and the opposite substrate may still be shorted to each other in a portion of the array and opposite substrates even if the LCD panel is not touched by an electric pen or a finger.

As aforementioned, when the array substrate and the opposite substrate are shorted to each other, a malfunction may be generated in the touch panel and a display quality of images may be decreased. Therefore, an inspecting method of whether or not the array substrate and the opposite substrate are shorted to each other may be required.

However, in order to inspect whether or not the array substrate and the opposite substrate are shorted, a complete inspection circuit including a plurality of transistors is formed in the array substrate. However, when the inspection circuit is formed in the array substrate, a space for a driving circuit such as a gate driving circuit may be decreased so that a display area may be decreased.

### BRIEF SUMMARY OF THE INVENTION

The present invention provides a display panel capable of easily inspecting a short circuit defect through a simplified test circuit.

The present invention also provides a method of inspecting the above-mentioned display panel.

The present invention also provides a method of manufacturing the above-mentioned display panel.

In exemplary embodiments, a display panel includes an array substrate, an opposite substrate and a liquid crystal layer. The opposite substrate faces the array substrate. The opposite substrate includes a common electrode receiving a common voltage. The liquid crystal layer is interposed between the array substrate and the opposite substrate.

The array substrate includes a gate wiring, a data wiring, a pixel section, a sensor wiring section, a sensor electrode section and a sensor pad section. The gate wiring is formed substantially in a first direction. The data wiring is formed substantially in a second direction crossing the first direction. The pixel section is electrically connected to the gate and data wirings. The sensor wiring section is spaced apart from the gate and data wirings. The sensor electrode section is electrically connected to the sensor wiring section. The sensor pad section applies a test voltage to the sensor wiring section in order to inspect a display panel defect.

The array substrate may be divided into a first area and a second area, the opposite substrate may be disposed in correspondence with the first area, the pixel section and the sensor electrode section may be formed on the first area, and the sensor pad se ion may be disposed on the second area. The pixel section may include a thin-film transistor ("TFT") electrically connected to the gate and data wirings, and a pixel electrode electrically connected to the TFT.

The test voltage may be substantially equal to a gate off voltage for turning-off the TFT. In a portion of the display panel having a panel defect, the common electrode contacts the sensor electrode section and receives a voltage between the common voltage and the test voltage.

The array substrate may further include a switching section and a switching control pad. The switching section may be disposed between the sensor wiring section and the sensor pad section. The switching section may turn-on/off an electrical connection between the sensor wiring section and the sensor pad section. The switching control pad may be electrically connected to the switching section in order to apply a control voltage for controlling the switching section.

The sensor wiring section may include a first sensor wiring formed substantially parallel with the data wiring, and a second sensor wiring formed substantially parallel with the gate wiring. The sensor electrode section may include a first sensor electrode electrically connected to the first sensor wiring, and a second sensor electrode electrically connected to the second sensor wiring. The sensor pad section may include a first sensor pad electrically connected to the first sensor wiring, and a second sensor pad electrically connected to the second sensor wiring.

The test voltage may include a first test voltage applied to the first sensor pad and a second test voltage applied to the second sensor pad. The first test voltage may be different from the second test voltage.

In other exemplary embodiments, there is provided a method of inspecting a display panel. The method of inspecting the display panel includes applying a test voltage to a sensor pad section electrically connected to a sensor wiring section of a display panel, determining whether or not a short circuit defect of the display panel is generated in the display panel by observing a display image, and applying a test image signal to a display test pad section electrically connected to gate and data wirings and determining whether or not a display defect is generated in the display panel.

The test voltage may be applied to the sensor wiring section through the sensor pad section electrically connected to the sensor wiring section.

The display panel may further include a switching section disposed between the sensor wiring section and the sensor pad section to control an electrical connection between the sensor wiring section and the sensor pad section, the method of applying the test voltage to the sensor pad section may include turning-on the switching section to be electrically connected between the sensor wiring section and the sensor pad section, and applying the test voltage to the sensor pad section.

The method of inspecting the display panel may further include electrically disconnecting the sensor wiring section and the sensor pad section by turning-off the switching section after determining whether or not a short circuit defect is generated in the display panel.

In still other exemplary embodiments, there is provided a method of manufacturing a display panel. The method of manufacturing the display panel includes applying a test voltage to a sensor pad section electrically connected to a sensor wiring section of a display panel, determining whether or not a short circuit defect of the display panel is generated in the display panel by observing a display image, and disconnecting an electrical connection between the sensor wiring section and the sensor pad section.

According to the above, the test voltage is applied to the sensor wiring section through the sensor pad section, such that a short defect, which is generated between the array substrate and the opposite substrate, may be easily inspected.

### BRIEF DESCRIPTION ON OF THE DRAWINGS

The above and other aspects, features and advantages of the present invention will become readily apparent by reference to the following detailed description when considered in conjunction with the accompanying drawings wherein:
FIG. 1 is a plan view showing an exemplary display panel according to an exemplary embodiment of the present invention;
FIG 2 is a circuit diagram showing an exemplary unit pixel of the exemplary display panel of FIG. 1;
FIG. 3 is a plan view showing an exemplary display panel according to another exemplary embodiment of the present invention;
FIG. 4 is a plan view showing an exemplary display panel according to still another exemplary embodiment of the present invention;
FIG. 5 is a graph showing a variation of a voltage that is applied to an exemplary common electrode of the exemplary display panel of FIG. 1;
FIG. 6 is a flow chart showing an exemplary method of manufacturing a display panel according to an exemplary embodiment of the present invention; and
FIG. 7 is a flow chart showing an exemplary method of inspecting a display panel according to an exemplary embodiment of the present invention.

### DETAILED DESCRIPTION OF THE INVENTION

The invention now will be described more fully hereinafter with reference to the accompanying drawings, in which embodiments of the invention are shown, This invention may, however, be embodied in many different forms and should not be construed as limited to the embodiments set forth herein. Rather, these embodiments are provided so that this disclosure will be thorough and complete, and will fully convey the scope of the invention to those skilled in the art. In the drawings, the size and relative sizes of layers and regions may be exaggerated for clarity.

It will be understood that when an element or layer is referred to as being "on," "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numbers refer to like elements throughout. As used herein, the term "and/or" includes any and all combinations of one or more of the associated listed items.

It will be understood that, although the terms first, second, third, etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the teachings of the present invention.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises" and/or "comprising," or "includes" and/or "including" when used in this specification, specify the presence of stated features, regions, integers, steps, operation, elements, and/or components, but do not preclude the presence or addition of one or more other features, regions, integers, steps, operations, elements, components, and/or groups thereof.

Exempla embodiments of the invention are described herein with reference to cross-section illustrations that are schematic illustrations of idealized embodiments (and intermediate structures) of the invention. As such, variations from the shapes of the illustrations as a result, for example, of manufacturing techniques and/or tolerances, are to be expected. Thus, embodiments of the invention should not be construed as limited to the particular shapes of regions illustrated herein but are to include deviations in shapes that result, for example, from manufacturing. For example, an implanted region illustrated as a rectangle will, typically, have rounded or curved features and/or a gradient of implant concentration at its edges rather than a binary change from implanted to non-implanted region. Likewise, a buried region formed by implantation may result in some implantation in the region between the buried region and the surface through which the implantation takes place. Thus, the regions illustrated in the figures are schematic in nature and their shapes are not intended to illustrate the actual shape of a region of a device and are not intended to limit the scope of the invention.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, the present invention will be described in detail with reference to the accompanying drawings.

### Exemplary Embodiment of a display panel

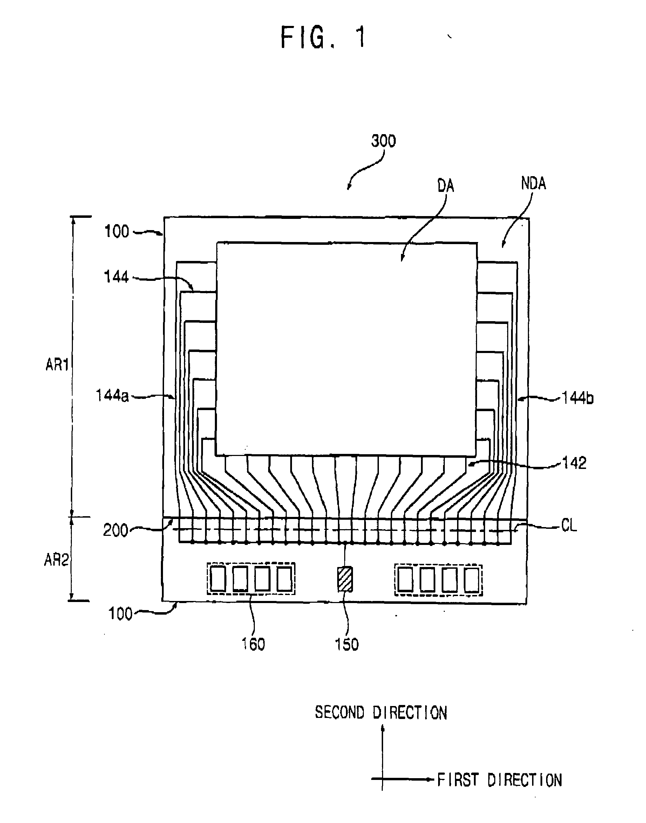

FIG. 1 is a plan view showing an exemplary display panel according to an exemplary embodiment of the present invention.

Referring to FIG. 1, an exemplary display panel 300 according to an exemplary embodiment of the present invention includes an array substrate 100, an opposite substrate 200 and a liquid crystal layer (not shown).

The array substrate 100 includes a plurality of pixel sections arranged in a matrix shape and a plurality of signal wiring electrically connected to the pixel sections. The array substrate 100 may include a first area AR1 and a second area AR2. The first area AR1 may include a display area DA for displaying an image, and a non-display area NDA formed in a peripheral region of the display area DA. The pixel sections are formed in the display area DA of the array substrate 100,

The opposite substrate 200 is disposed to face the array substrate 100. In an exemplary embodiment, the opposite substrate 200 may be disposed to face the first area AR1 of the array substrate 100,

The opposite substrate 200 may include, for example, a light-blocking layer formed on a transparent substrate to shield light, a plurality of color filters formed on the transparent substrate, an over-coating layer formed on the color filter layers, and

a common electrode formed on the over-coating layer to cover the over-coating layer, but is not limited thereto. The color filters may include, for example, red filters, green filters and blue filters.

The liquid crystal layer is interposed between the array substrate 100 and the opposite substrate 200. Therefore, when an electric field is applied to the liquid crystal layer, an arrangement of liquid crystal molecules of the liquid crystal layer is altered to change an optical transmissivity thereof, such that an image is displayed.

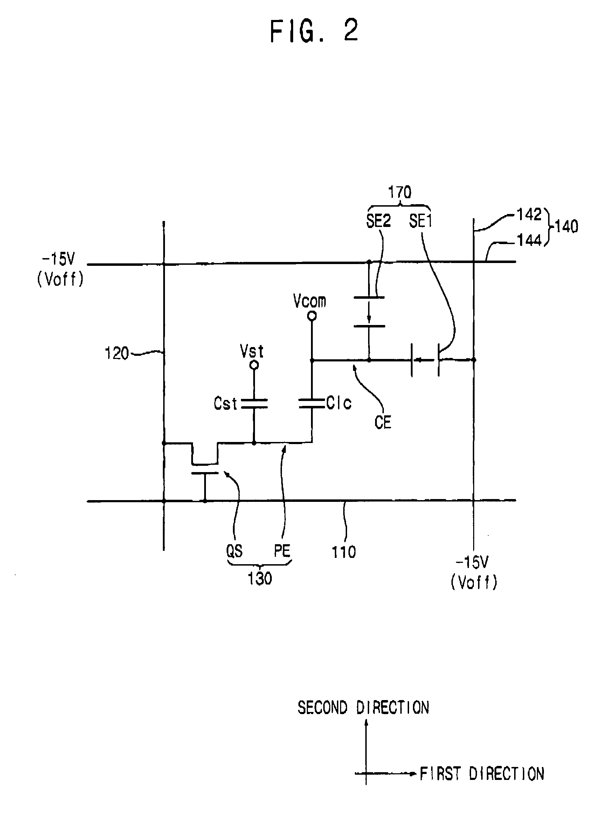

FIG. 2 is a circuit diagram showing an exemplary unit pixel of the exemplary display panel of FIG. 1.

Referring to FIGS. 1 and 2, an exemplary array substrate 100 according to an exemplary embodiment of the present invention includes a gate wiring 110, a storage wiring (not shown), a data wiring 120, a pixel section 130, a sensor wiring section 140, a sensor pad section 150, a display-inspecting pad section 160 and a sensor electrode section 170.

The gate wiring 110 is formed in a first direction. Particularly, a plurality of gate wirings 110 is spaced apart from each other to be formed along the first direction, A plurality of storage wirings is formed along the first direction.

The data wiring 120 is formed in a second direction crossing the first direction and may be insulated from the gate wiring 110. Particularly, a plurality of data wirings 120 is spaced apart from each other to be formed along the second direction. The second direction may be substantially perpendicular to the first direction.

As aforementioned, as the gate wirings 110 are formed substantially perpendicular to the data wirings 120, a plurality of unit pixels is formed in the array substrate 100. the unit pixels are formed in the display area DA of the first area AR1 of the array substrate 100.

The pixel section 130 is formed in each unit pixel to be electrically connected to the gate wiring 110 and the data wiring 120, respectively. The pixel section 130 includes a thin-film transistor ("TFT") QS electrically connected to the gate wiring 110 and the data wiring 120, and a pixel electrode PE electrically connected to the TFT QS.

Particularly, the TFT QS includes a gate electrode electrically connected to the gate wiring 110, a source electrode electrically connected to the data wiring 120 and a drain electrode electrically connected to the pixel electrode PE.

The pixel electrode PE is spaced apart from a common electrode CE of the opposite substrate 200 by a predetermined interval to form a liquid crystal capacitor Clc. The pixel electrode PE is spaced apart from the storage wiring by a predetermined interval to form a storage capacitor Cst. The common electrode CE of the opposite substrate 200 receives a common voltage Vcom, and the storage wiring receives a storage reference voltage Vst. The common voltage Vcom may include a substantially equal voltage to the storage reference voltage Vst. In an exemplary embodiment, the common voltage Vcom may be set to about -2 V.

The sensor wiring section 140 is spaced apart from the gate and data wirings 110 and 120. Particularly, the sensor wiring section 140 includes a first sensor wiring 142 and a second sensor wiring 144.

The first sensor wiring 142 is formed in the second direction which is substantially parallel with the data wiring 120. The first sensor wiring 142 is formed adjacent to the data wiring 120. The first sensor wiring 142 may be formed by a predetermined number of data wirings 120. In an exemplary embodiment, the first sensor wiring 142 may be formed correspondingly to six data wirings 120, and may be formed adjacent to a data wiring 120, but is not limited thereto.

The second sensor wiring 144 is formed in the first direction which is substantially parallel with the gate wiring 110. The second sensor wiring 144 is formed adjacent to the gate wiring 110. The second sensor wiring 144 may be formed by a predetermined number of gate wirings 110. In an exemplary embodiment, the second sensor wiring 144 may be formed correspondingly to six gate wirings 110, and is formed adjacent to a gate wiring 110, but is not limited thereto.

Referring to FIG.1, the sensor pad section 150 is disposed in the second area AR2 of the array substrate 100 to provide the sensor wiring section 140 with a test voltage to inspect a display panel defect of the display panel 300.

The sensor pad section 150 is electrically connected to the sensor wiring section 140 before an inspection of the display panel defect; however the sensor pad section 150 is electrically isolated from the sensor wiring section 140 after an inspection of the display panel defect. Therefore, when the sensor pad section 150 is electrically connected to the sensor wiring section 140, the sensor pad section 150 receives the test voltage from an internal side and transmits the test voltage to the sensor wiring section 140.

In exemplary embodiments, the sensor pad section 150 is electrically connected to an end portion of the first sensor wiring 142, and is electrically connected to an end portion or two end portions of the second sensor wiring 144. In FIG. 1, the sensor pad section 150 is electrically connected to two end portions of the second sensor wiring 144. In alternative exemplary embodiments, the sensor pad section 150 may be electrically connected to a first end portion of the second sensor wiring 144 by a first connection wiring 144a formed in a first area of a display area DA, and may be electrically connected to a second end portion of the second sensor wiring 144 by a second connection wiring 144b formed in a second area of the display area DA. In further exemplary embodiments, the first area may correspond to a left side, and the second area may correspond to a right side, when viewed from a plan of the display panel 300, as illustrated in FIG. 1.

Referring to FIGS. 1 and 2, an electrical connection between the sensor pad section 150 and the sensor wiring section 140 may be cut along a cutting line CL. That is, a laser beam is irradiated onto the array substrate 100 along the cutting line CL, such that the sensor pad section 150 and the first and second sensor wirings 142 and 144, respectively, may be electrically disconnected from each other.

The display-inspecting pad section 160 is disposed in the second area AR2 of the array substrate 100. The display-inspecting pad section 160 is electrically connected to the gate wiring 110 and the data wiring 120, and then a test image signal that is applied from an external side is transmitted to test a display panel defect.

The sensor electrode section 170 is formed in a display area DA of the first area AR1 of the array substrate 100. In an exemplary embodiment, the sensor electrode section 170 may be formed within each unit pixel, that is, each of the sensor electrode sections 170 may be formed in all unit pixels. In alternative exemplary embodiments, each of the sensor electrode sections 170 may be formed in each of a predetermined number of unit pixels in a first direction and in a second direction. For example, each of the sensor electrode sections 170 may be formed in every fourth unit pixel in the first direction and in the second direction, but the arrangement and number of sensor electrode sections 170 are not limited thereto.

The sensor electrode section 170 is electrically connected to the sensor wiring section 140. In an exemplary embodiment, the sensor electrode section 170 may include a first sensor electrode SE1 electrically connected to the first sensor wiring 142, and a second sensor electrode SE2, electrically connected to the second sensor wiring 144.

The sensor wiring section 140 may be electrically connected to a sensor driving section (not shown). When the sensor electrode section 170 makes contact with a common electrode CE of the opposite substrate 200, a common voltage Vcom of the common electrode CE is applied to the sensor driving section through the sensor electrode section 170 and the sensor wiring section 140. That is, a position datum formed by an external pressure is applied to the sensor driving section through the sensor wiring section 140, such that a predetermined program may be performed.

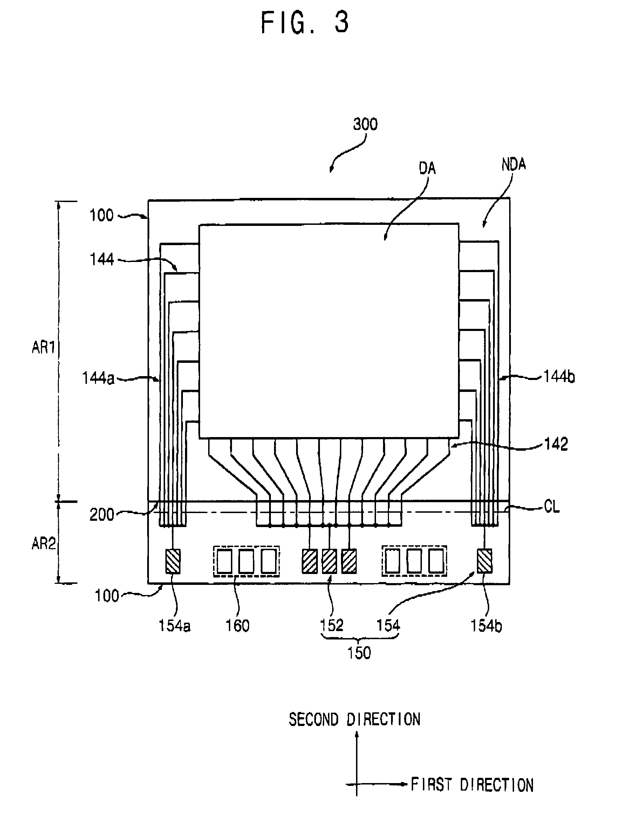

FIG. 3 is a plan view showing an exemplary display panel according to other exemplary embodiments of the present invention.

Referring to FIGS. 2 and 3, an exemplary sensor pad section 150 according to the present exemplary embodiment may include a plurality of sensor pads.

Particularly, the sensor pad section 150 is formed in the second area AR2 of the array substrate 100. The sensor pad section 150 includes a first sensor pad 152 and a second sensor pad 154.

The first sensor pad 152 is electrically connected to a first terminal of the first sensor wiring 142. In an exemplary embodiment, a plurality of the first sensor pads 152 may be electrically connected to the first terminal of the first sensor wiring 142.

The second sensor pad 154 is electrically connected to a first terminal of the second sensor wiring 144 or two terminals of the second sensor wiring 144. In an exemplary embodiment, the second sensor pad 154 may include a first sensor pad 154a and a second sensor pad 154b when viewed from a plan view of the display panel 300, as illustrated in FIG. 3. The first sensor pad 154a is formed in a first portion of the second area AR2 to be electrically connected to a first terminal of the second sensor wiring 144 when viewed from a plan view of the display panel 300, as illustrated in FIG. 3. The second sensor pad 154b is formed in a second portion of the second area AR2 to be electrically connected to a second terminal of the second sensor wiring 144 when viewed from a plan view of the display panel 300, as illustrated in FIG. 3. That is, the first sensor pad 154a is electrically connected to the first terminal of the second sensor wiring 144 through the first connection wiring 144a, and the second sensor pad 154b is electrically connected to the second terminal of the second sensor wiring 144 through the second connection wiring 144b.

The test voltage is applied to the sensor pad section 150 to inspect a short circuit defect of the display panel 300. Particularly, the test voltage includes a first sensor voltage applied to the first sensor pad 152, and a second sensor voltage applied to the second sensor pad 154. In the present exemplary embodiment, the first and second sensor voltages may be equal or different from each other. In an alternative exemplary embodiment, after a short circuit defect of the display panel 300 is inspected, an electrical connection between the sensor pad section 150 and the sensor wiring section 140 may be disconnected along a cutting line CL.

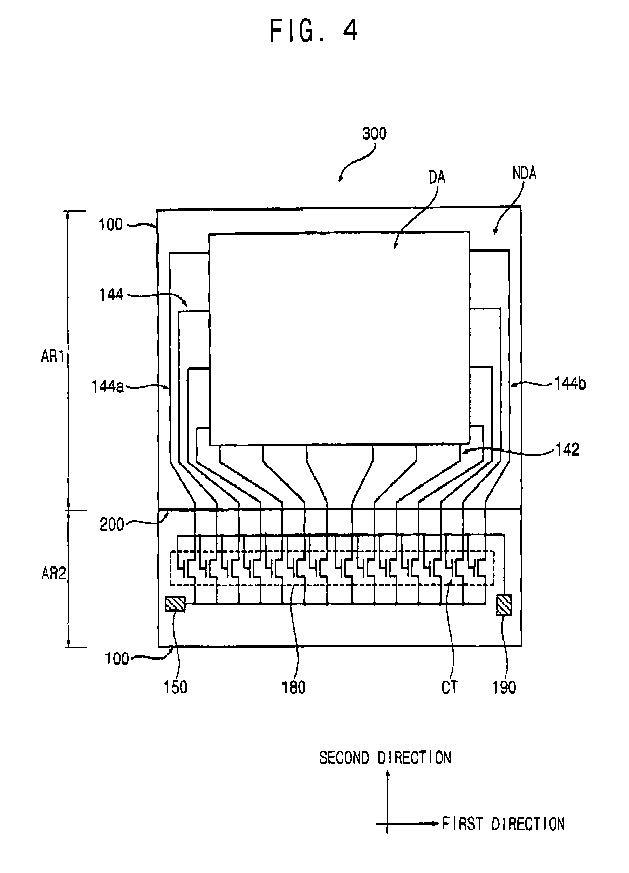

FIG. 4 is a plan view showing an exemplary display panel according to still other exemplary embodiments of the present invention,

Referring to FIGS. 2 and 4, an exemplary array substrate 100 according to an exemplary embodiment of the present invention may further include a switching section 180 and a switching control pad 190.

The switching section 180 is disposed between the sensor wiring section 140 and the sensor pad section 150 to be electrically connected to the sensor wiring section 140 and the sensor pad section 150. The switching section 180 turns-on or off an electrical connection between the sensor wiring section 140 and the sensor pad section 150. Here, the switching section 180 may be formed in all of the first and second areas AR1 and AR2, respectively, of the array substrate 100. In alternative exemplary embodiments, the switching section 180 may be formed in the second area AR2 of the array substrate 100.

The switching control pad 190 is electrically connected to the switching section 180. The switching control pad 190 receives a control voltage from an external side to control an ON/OFF of the switching section 180.

The switching section 180 includes a plurality of control transistors CT. The number of the control transistors CT is equal to the number of wirings of the sensor wiring section 140. That is, the number of control transistors CT is equal to the number of the first and second sensor wirings 142 and 144.

Each of the control transistors CT includes a source terminal, a drain terminal and a gate terminal, respectively. Each of the source terminals is electrically connected to the sensor pad section 150. Each of the drain terminals is electrically connected to wirings of the sensor wiring section 140 in a one-to-one correspondence. Each of the gate terminals is electrically connected to the switching control pad 190.

As aforementioned, when the array substrate 100 further includes the switching section 180 and the switching control pad 190, the electrical disconnection between the sensor pad section 150 and the sensor wiring section 140 after inspecting a short defect, such as a short circuit defect, of the display panel 300 may be omitted.

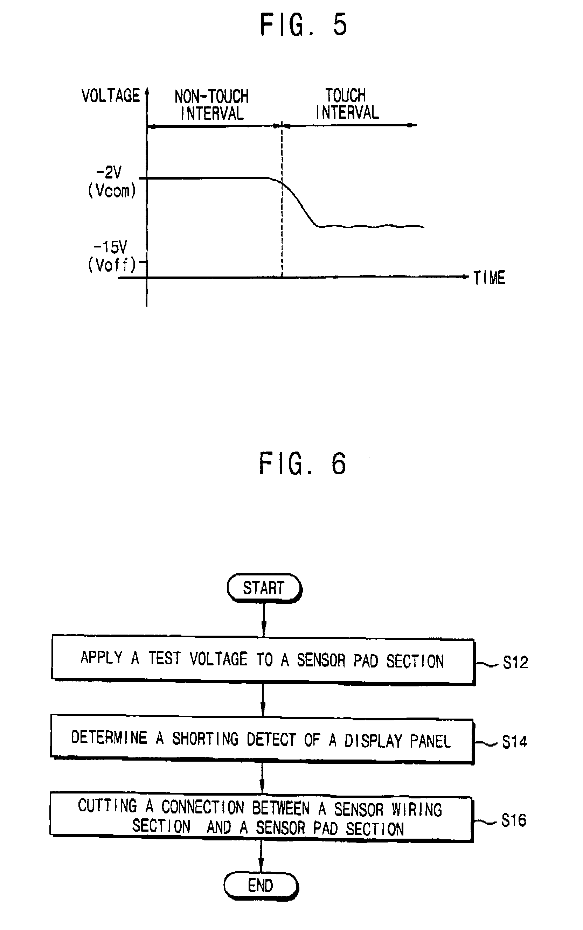

FIG. 5 is a graph showing a variation of a voltage that is applied to an exemplary common electrode of the exemplary display panel of FIG. 1.

Referring to FIGS. 1, 2 and 5, a voltage variation applied to the common electrode CE of the opposite substrate 200 will now be described in detail when the array and opposite substrates 100 and 200, respectively, are shorted and non-shorted to each other.

A test voltage is applied to the sensor electrode section 170 of the array substrate 100 through the sensor pad section 150 and the sensor wiring section 140, and a common voltage Vcom is applied to the common electrode CE of the opposite substrate 200. The test voltage may be substantially equal to the gate off voltage Voff for turning-off the TFT QS of the pixel section 130. In an exemplary embodiment, the gate off voltage Voff is about -15 V, and the common voltage Vcom is about -2 V.

Firstly, a condition of when the array and opposite substrates 100 and 200, respectively, are non-shorted to each other will be described as follows. Here, the condition of the array and opposite substrates 100 and 200, respectively, that are non-shorted to each other is substantially equal or at least substantially similar to a condition of the sensor electrode section 170 and the common electrode CE that are non-shorted to each other.

When the sensor electrode section 170 and the common electrode CE are non-shorted to each other, the sensor electrode section 170 and the common electrode CE are electrically disconnected from each other, such that the sensor electrode section 170 and the common electrode CE are at about -15 V and -2 V, respectively. As a result, a stable voltage difference for a gradation may be generated between the common electrode CE and the pixel electrode PE of the display panel 300, such that a stable image is displayed.

Secondly, a condition of when the array and opposite substrates 100 and 200 are shorted to each other in some portion will be described as follows. Here, the condition of the array and opposite substrates 100 and 200 that are shorted to each other is substantially equal or at least substantially similar to a condition of the sensor electrode section 170 and the common electrode CE that are shorted to each other by an external force.

Therefore, when the sensor electrode section 170 and the common electrode CE are contacted with each other in some portion, the common electrode CE corresponding to such portion is affected by the test voltage applied to the sensor electrode section 170. Particularly, the voltage applied to the common electrode CE in a portion of the common electrode CE contacting the sensor electrode section 170 may include a value between the common voltage Vcom and the gate off voltage Voff, for example, about -7 V to about -8 V, but is not limited thereto.

As mentioned above, in a condition of a common voltage of some portion at about -7V to about -8V and a common voltage of the remaining portion at about -2 V, when an equal voltage is applied to all pixel electrodes PE, the display panel 300 may display different images in some portion than in the remaining portion of the display panel 300. In exemplary embodiments, the display panel 300 may display a white image in some portion of the display panel 300 and display a black image in the remaining portion of the display panel 300.

That is, when the test voltage Is applied to the sensor wiring section 140 through the sensor pad section 150, it is easy to detect whether or not a short defect is generated between the array substrate 100 and the opposite substrate 200. As a result, an inspection circuit formed in the array substrate 100 may be omitted, so that a practical space is increased to enlarge a display area DA.

### Method of manufacturing a display panel

FIG. 6 is a flow chart showing an exemplary method of manufacturing a display panel according to an exemplary embodiment of the present invention.

Referring to FIG. 6, an exemplary process for inspecting and manufacturing the display panel 300 as shown in FIGS. 1 to 3 will now be described.

A test voltage is applied to the sensor pad section 150 (S12). The test voltage is transmitted to the sensor electrode section 170 through the sensor wiring section 140. In the present exemplary embodiment, the test voltage may be equal to the gate off voltage Voff for turning-off the TFT QS of the pixel section 130. In exemplary embodiments, the gate off voltage Voff may be about -15 V, but is not limited thereto.

A first sensor voltage may be applied to the first sensor pad 152 of the display panel 300 as shown in FIG. 3, and a second sensor voltage may be applied to the second sensor pad 154. As a result, the first sensor voltage is applied to the first sensor electrode SE1, and the second sensor voltage is applied to the second sensor electrode SE2.

Then, it is determined whether or not a short defect of the display panel 300 (S14) is generated therein. An assumption is made that the display panel 300 is driven by a normally white mode and a uniform voltage is applied to the pixel electrode PE, such that the display panel 300 displays a black image in a full screen thereof.

Here, when the display panel 300 displays a black image in a full screen thereof after the test voltage is applied to the sensor pad section 150, it may be determined that a short defect of the display panel 300 is not generated therein. However, when the display panel 300 displays an image that is different from the black image, for example, a white image, it may be determined that a short defect of the display panel 300 is generated therein.

When the first and second sensor voltages are applied to the first and second sensor pads 152 and 154 of the display panel 300 as shown in FIG. 3, respectively, it may be possible to determine whether or not one of the first sensor electrode SE1 and the second sensor electrode SE2 contacts with the common electrode CE of the opposite substrate 200. That is, the first and second sensor voltages may be different from each other, such that a voltage of the common electrode CE corresponding to the contact portion is different in a condition of the first sensor electrode SE1 making contact with the common electrode CE than a condition of the second sensor electrode SE2 making contact with the common electrode CE.

As aforementioned, when the voltage of the common electrode CE is different in a condition of the first sensor electrode SE1 making contact with the common electrode CE than in a condition of the second sensor electrode SE2 making contact with the common electrode CE in the contact portion, images displayed in the display panel 300 are different from each other such that it is possible to determine whether or not one of the first and second electrodes SE1 and SE2 makes contact with the common electrode CE using the image.

Lastly, the sensor wiring section 140 is electrically disconnected from the sensor pad section 150 (S16).

In an exemplary embodiment, a laser beam may be applied along a cutting line CL, such that the sensor wiring section 140 is electrically disconnected from the sensor pad section 150. Here, the cutting line CL may be formed in the second area AR2 of the array substrate 100. The cutting line CL may include a straight line, but is not limited thereto.

As aforementioned, as the sensor wiring section 140 is electrically disconnected from the sensor pad section 150, the display panel 300 may be manufactured.

In an alternative exemplary embodiment, the test image signal is applied to the display-inspecting pad section 180 during a process of manufacturing the display panel 300, so that it is possible to detect whether or not a display error of an image is generated therein, In an exemplary embodiment, applying the test image signal to the display inspecting pad section 160 and applying the test voltage to the sensor pad section 150 may be performed simultaneously.

That is, the test image signal is applied to the display-inspecting pad section 160 to determine whether or not the display error is generated therein, and simultaneously the test voltage is applied to the sensor pad section 150 to determine whether or not the short circuit defect of the display panel 300 is generated therein. As a result, an inspection time of the display panel 300 may be decreased.

### Method of inspecting a display panel

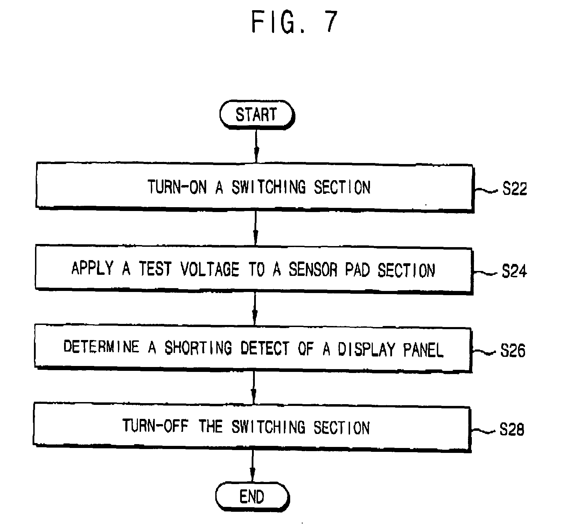

FIG. 7 is a flow chart showing an exemplary method of inspecting a display panel according to an exemplary embodiment of the present invention.

Referring to FIG, 7, an exemplary process for inspecting the display panel 300 as shown in FIGS. 2 and 4 will now be described.

The switching section 180 is turned-on to be electrically connected to the sensor wiring section 140 and the sensor pad section 150 (S22). In an exemplary embodiment, a control voltage of a high level may be applied to the switching control pad 190 to turn-on the control transistors CT, such that the sensor wiring section 140 and the sensor pad section 150 may be electrically connected to each other.

Then, the test voltage is applied to the sensor pad section 150 (S24). The test voltage is transmitted to the sensor electrode section 170 through the sensor wiring section 140.

After the test voltage is applied to the sensor pad section 150, it is determined whether or not a short defect of the display panel 300 is generated therein (S26). The method for determining whether or not the short defect of the display panel 300 is generated therein may be substantially equal to the method described in FIG. 6.

Then, the switching section 180 is turned-off to be electrically disconnected from the sensor wiring section 140 and the sensor pad section 150 (S28). In an exemplary embodiment, a control voltage of a low level may be applied to the switching control pad 190 to turn-off the control transistors CT, such that the sensor wiring section 140 and the sensor pad section 150 may be electrically disconnected from each other. In alternative exemplary embodiments, no control voltage may be applied to the switching control pad 190 to turn-off the control transistors CT, such that the sensor wiring section 140 and the sensor pad section 150 may be electrically disconnected from each other.

As aforementioned, the switching section 180 is tumed-on/off to control an electrical connection between the sensor wiring section 140 and the sensor pad section 150, such that the cutting process of an electrical connection between the sensor wiring section 140 and the sensor pad section 150 using a laser beam as shown in FIG. 6 may be omitted.

Furthermore, the test image signal is applied to the display-inspecting pad section 160 when the test voltage is applied to the sensor pad section 150, such that it is simultaneously determined whether or not the display error is generated therein and whether or not the short circuit defect of the display panel 300 is generated therein.

As described above, the exemplary sensor pad section is electrically connected to the sensor wiring section such that the test voltage is applied to the sensor wiring section through the sensor pad section, such that a short circuit defect, which is generated between the array substrate and the opposite substrate, may be easily inspected. As a result, an inspection circuit formed in the array substrate may be omitted, so that a practical space is increased to enlarge a display area,

Furthermore, the test image signal is applied to the exemplary display-inspecting pad section when the test voltage is applied to the sensor pad section, such that it is simultaneously determined whether or not the display error is generated therein and whether or not the short circuit defect of the display panel is generated therein. Therefore, an inspection time of the display panel may be decreased.

Although some exemplary embodiments of the present invention have been described, it is understood that the present invention should not be limited to these exemplary embodiments but various changes and modifications can be made by one of ordinary skill in the art within the spirit and scope of the present invention as hereinafter claimed.

## Claims

1. A display panel comprising:
an array substrate including:
a gate wiring formed substantially in a first direction;
a data wiring formed substantially in a second direction crossing the first direction;
a pixel section electrically connected to the gate and data wirings;
a sensor wiring section spaced apart from the gate and data wirings;
a sensor electrode section electrically connected to the sensor wiring section; and
a sensor pad section applying a test voltage to the sensor wiring
section in order to inspect a display panel defect;
an opposite substrate facing the array substrate, the opposite substrate having a common electrode receiving a common voltage; and
a liquid crystal layer interposed between the array substrate and the opposite substrate.

2. The display panel of claim 1, wherein the test voltage is applied to the sensor electrode section through the sensor pad section and the sensor wiring section.

3. The display panel of claim 1, wherein the array substrate includes a first area and a second area, and
the opposite substrate is correspondingly disposed to the first area, the pixel section and the sensor electrode section are formed on the first area, and the sensor pad section is disposed on the second area.

4. The display panel of claim 1, wherein the pixel section comprises:
a thin-film transistor electrically connected to the gate and data wirings; and
a pixel electrode electrically connected to the thin-film transistor.

5. The display panel of claim 4, wherein the test voltage is substantially equal to a gate off voltage for turning-off the thin-film transistor.

6. The display panel of claim 1, wherein, in a portion of the display panel having a panel defect, the common electrode contacts the sensor electrode section and receives a voltage between the common voltage and the test voltage.

7. The display panel of claim 1, wherein the array substrate further comprises a switching section disposed between the sensor wiring section and the sensor pad section, the switching section turning-on/off an electrical connection between the sensor wiring section and the sensor pad section.

8. The display panel of claim 7, wherein the array substrate further comprises a switching control pad electrically connected to the switching section in order to apply a control voltage for controlling the switching section.

9. The display panel of claim 8, wherein the switching section comprises a plurality of control transistors which is equal to the number of wirings of the sensor wiring section.

10. The display panel of claim 9, wherein each source terminal of the control transistors is electrically connected to the sensor pad section, respectively,
each drain terminal of the control transistors is electrically connected one-to-one to the sensor wiring sections, respectively, and
each gate terminal of the control transistors is electrically connected to the switching control pad.

11. The display panel of claim 1, wherein the sensor wiring section comprises:
a first sensor wiring formed substantially parallel with the data wiring; and
a second sensor wiring formed substantially parallel with the gate wiring.

12. The display panel of claim 11, wherein the sensor electrode section comprises:
a first sensor electrode electrically connected to the first sensor wiring; and
a second sensor electrode electrically connected to the second sensor wiring.

13. The display panel of claim 11, wherein the sensor pad section is electrically connected to a first terminal of the first sensor wiring, and is electrically connected to two terminals of the second sensor wiring,

14. The display panel of claim 11, wherein the sensor pad section comprises:
a first sensor pad electrically connected to the first sensor wiring; and
a second sensor pad electrically connected to the second sensor wiring.

15. The display panel of claim 14, wherein the test voltage includes a first test voltage applied to the first sensor pad and a second test voltage applied to the second sensor pad, the first test voltage different from the second test voltage.

16. The display panel of claim 1, wherein the array substrate further comprises a display inspecting pad section electrically connected to the gate and data wirings in order to inspect a display defect of an image.

17. A method of inspecting a display panel, the method comprising:
applying a test voltage to a sensor pad section electrically connected to a sensor wiring section of a display panel;
determining whether or not a short circuit defect of the display panel is generated in the display panel by observing a display image; and
applying a test image signal to a display test pad section electrically connected to gate and data wirings and determining whether or not a display defect is generated in the display panel.

18. The method of claim 17, wherein the test voltage is applied to the sensor wiring section through the sensor pad section electrically connected to the sensor wiring section.

19. The method of claim 18, wherein applying the test voltage to the sensor pad section comprises:
turning-on a switching section which controls an electrical connection between the sensor wiring section and the sensor pad section to electrically connect the sensor wiring section and the sensor pad section; and
applying the test voltage to the sensor pad section.

20. The method of claim 19, further comprising:
electrically disconnecting the sensor wiring section and the sensor pad section by turning-off the switching section after determining whether or not a short circuit defect is generated in the display panel.

21. The method of claim 17, wherein applying the test image signal to the display test pad section is simultaneously performed with applying the test voltage to the sensor pad section.

22. The method of claim 17, wherein a first sensor voltage is applied to a first sensor wiring formed substantially parallel with a data wiring of the display panel,
a second sensor voltage different from the first sensor voltage is applied to a second sensor wiring formed substantially parallel with a gate wiring of the display panel.

23. A method of manufacturing a display panel, the method comprising:
applying a test voltage to a sensor pad section electrically connected to a sensor wiring section of a display panel;
determining whether or not a short circuit defect of the display panel is generated by observing a display image; and
disconnecting an electrical connection between the sensor wiring section and the sensor pad section.
